(19) Europäisches Patentamt
European Patent Office
Office européen des brevets

(11) Publication number: 0 058 018
B1

(12) EUROPEAN PATENT SPECIFICATION

(45) Date of publication of patent specification: 19.06.85

(51) Int. Cl.4: G 11 B 7/12, G 11 B 7/08

(21) Application number: 82300422.1

(22) Date of filing: 27.01.82

# (54) Reading information optically.

(30) Priority: 30.01.81 JP 12563/81
22.06.81 JP 91969/81

(43) Date of publication of application:
18.08.82 Bulletin 82/33

(45) Publication of the grant of the patent:
19.06.85 Bulletin 85/25

(84) Designated Contracting States:
DE FR GB NL SE

(56) References cited:
DE-A-2 811 111
DE-A-3 015 042
GB-A-2 025 110

Patent Abstracts of Japan Vol. 3, No. 155, 19 December 1979 page 69E160

(73) Proprietor: SONY CORPORATION
7-35 Kitashinagawa 6-Chome Shinagawa-ku
Tokyo 141 (JP)

(72) Inventor: Noda, Toyokazu
3-4-7 Nakamagome Ohta-ku
Tokyo (JP)
Inventor: Ohki, Hiroshi
7-2-2-305 Arima Takatsu-ku
Kawsaki-shi Kanagawa-ken (JP)

(74) Representative: Thomas, Christopher Hugo et al
D Young & Co 10 Staple Inn
London WC1V 7RD (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to reading information optically, and more particularly relates to an objective lens assembly in an apparatus directing a light beam on a record medium surface for optically reading information recorded in a track on the surface.

It is known, for example, from US Patent 4,135,083, to provide an optical disc player with a focusing servo by which the light beam from a laser light source is correctly focused on the disc surface through an objective lens, and also with a tracking servo by which the point of impingement of the focused light beam on the disc surface is made to coincide with the track being scanned or read. In the above US patent, and particularly in Figures 7 to 10 thereof, and also in UK Patent Application 2,025,110A, there is a disclosure of supporting the objective lens by first and second sets of springs which respectively permit the objective lens to be moved, in response to electromagnetically applied forces, both in the axial direction for correcting focusing errors, and in a direction extending radially with respect to the track being scanned for correcting tracking errors. However, the use of a plurality of leaf springs to support the objective lens leads to undesirable complexities in assembling the objective lens and its mounting structure, and gives rise to additional problems in that resonance is easily generated and, when the leaf springs are formed of metal, the value of Q becomes high and noises are likely to be produced during servo operation.

UK Patent Application 2,025,110A and Patent Abstracts of Japan, Volume 3, No. 155, 19 December 1979, page 98E160 (JP—A—54-135 505) also refer to the use of an elastic frame or elastic bodies for supporting a tubular body carrying the objective lens.

According to the present invention there is provided an apparatus for directing a light beam onto a record medium surface for optically reading information recorded in a track on said surface and including an objective lens assembly comprising:

a lens interposed in the path of said light beam for focusing said light beam substantially at said record medium surface;

a tubular lens mounting member through which said path extends longitudinally and having said lens mounted at one end of said mounting member with an optical axis of said lens coinciding substantially with said path of said light beam therethrough;

a support member extending about said mounting member;

metallic leaf spring means extending between the other end of said mounting member and said support member for longitudinal movements of said mounting member in the direction of said optical axis and for swinging movements of said mounting member about a centre in said other end; and

an elastic body interposed between said support member and said mounting member at a location along said mounting member spaced from said other end; characterised in that:

said elastic body is made of foamed synthetic resin and has a plurality of legs extending between said mounting member and said support member, said legs extending in predetermined directions so that there is relatively large resistance to said swinging movements of said mounting member in said predetermined directions and a relatively small resistance to said swinging movements of said mounting member in directions angled to said predetermined directions.

The invention will now be described by way of example with reference to the accompanying drawings, throughout which like references refer to like elements, and in which:

Figure 1 is a diagrammatic view showing components of an optical disc player in which an embodiment of objective lens assembly according to the invention can be used;

Figure 2 is a vertical sectional view of an embodiment of objective lens assembly according to the invention;

Figure 3 is a top plan view of a lead spring member in the assembly of Figure 2;

Figure 4A is a sectional view taken along the line IV—IV in Figure 2; and

Figure 4B is a sectional view similar to that of Figure 4A, but showing a modified embodiment.

Referring initially to Figure 1, it will be seen that, in an apparatus to which the invention may advantageously be applied, a laser light source 1 generates a light beam L which passes through a beam splitter which may be a semi-reflecting mirror 2 so as to travel through an objective lens assembly 3 in a path which is normal to the surface of an optical record disc 4. The objective lens assembly 3 is provided for focusing the light beam substantially at the surface of the disc 4 as the disc 4 is rotated about its centre by means of a motor 5. The focused light beam, upon being reflected from the surface of the disc 4, is returned through the objective lens assembly 3 and is then reflected by the beam splitter 2 so as to impinge on a photosensitive detector or transducer device 6. The reflected light beam is modulated by an information signal recorded in a substantially circular track on the surface of the disc 4 and which is scanned by the focused light beam as the disc 4 is rotated so that an output of the transducer device 6 is similarly modulated to reproduce the recorded signal. The record track being scanned on the disc 4 may be one turn of a continuous spiral, and the laser 1, the beam splitter 2, the objective lens assembly 3 and the transducer device 6 may all be included in a head or reading unit 7 which is movable radially with respect to the axis of rotation of the disc 4 in synchronism with the rotation of the disc 4 by the motor 5 so that the focused light beam will approximately track the spiral record track.

As is conventional, the light beam reflected from the disc 4 may be made to contain information relative to the focusing of the light beam with respect to the surface of the disc 4 and also information concerning tracking of the record track by the light beam, and such focusing and tracking information are detected by parts of the transducer device 6 and employed in a known manner to supply focusing and tracking servo or error signals to the objective lens assembly 3. As hereinbefore described in detail, such focusing and tracking servo or error signals are respectively effective, in the objective lens assembly 3, to move an objective lens thereof substantially vertically towards and away from the disc 4 for correcting focusing errors, and radially with respect to the axis of rotation of the disc 4, that is, substantially transversely with respect to the track being scanned, for correcting tracking errors.

Referring now to Figure 2, it will be seen that the objective lens assembly 3 includes a tubular lens mounting member 11 through which the path of the light beam L extends longitudinally. An objective lens 12 is suitably mounted at one end of the mounting member 11, for example, at the lower end as viewed in Figure 2, with the optical axis of the objective lens 12 coinciding substantially with the path of the light beam therethrough. The other or upper end of the mounting member 11 is suspended by way of a leaf spring member 13 from a cylindrical support member 14 which extends about the mounting member 11 and forms an outer housing of the objective lens assembly 3.

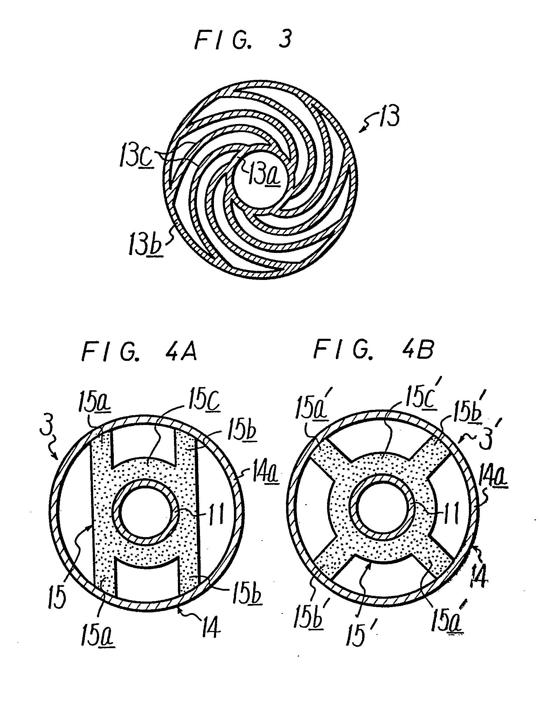

As shown particularly in Figure 3, the leaf spring member 13 is preferably formed of a metal plate which is punched or stamped out so as to have inner and outer circular portions 13a and 13b suitably secured to the upper end surfaces of the mounting member 11 and the support member 14, respectively, and a plurality of equally spaced, substantially spiralling connecting portions 13c extending integrally from the inner circular portion 13a to the outer circular portion 13b. By reason of the described configuration of the leaf spring member 13, the connecting portions 13c thereof may be of substantial length for providing the requisite resilient flexibility without requiring a correspondingly large radial distance between the mounting member 11 and the outer housing or the support member 14. Due to its suspension from the outer housing or the support member 14 by way of the leaf spring member 13, the mounting member 11 is free to move longitudinally up and down, that is, in the direction of the optical axis of the objective lens 12, and the mounting member 11 is further free to swing or move angularly about a centre located at the upper end of the mounting member 11.

The objective lens assembly 3 is provided with an elastic body 15 of foamed synthetic resin which is interposed between the mounting member 11 and the support member 14 at a location along the mounting member 11 spaced from its upper or resiliently mounted end, for example, at a location approximately midway between the ends of the mounting member 11, as shown in Figure 2, for further yieldably supporting the mounting member 11 with respect to its longitudinal and swinging movements relative to the support member 14. The material of which the elastic body 15 is formed is substantially bulky, that is, occupies a relatively large volume for its weight. For example, the elastic body 15 of foamed synthetic resin may be formed of polyurethane foam. The elastic body 15 is of substantial thickness in the axial direction of the mounting member 11 and is adhesively or otherwise bonded to the outer surface of the support member 14 so as to exert the desired yieldable resistance to the longitudinal and swinging movements of the mounting member 11. By suitably selecting the cross-sectional configuration of the elastic body 15 in a plane perpendicular to the longitudinal axis of the mounting member 11, the elastic body 15 may provide relatively large yieldable resistance to swinging movements of the mounting member 11 in certain predetermined directions, and relatively small yieldable resistance to swinging movements in other directions.

Thus, for example, as shown in Figure 4A, the elastic body 15 may be generally of H-shaped cross-section to present substantially parallel legs 15a and 15b extending from a central portion 15c embracing the mounting member 11 to the inner surface of the support member 14. Such H-shaped cross-sectional configuration is imparted to the elastic body 15 in the case where the swinging movements of the mounting member 11, and the corresponding lateral movements of the objective lens 12 are to be employed for correcting tracking errors, that is, for displacing the point of impingement of light beam L on the surface of the disc 4 in the radial direction with respect to the centre of the disc 4, which corresponds to displacements in the transverse direction with respect to the substantially circular track being scanned. In such case, the elastic body 15 is positioned so that its parallel legs 15a and 15b extend substantially in the direction along the track being scanned, that is, the legs 15a and 15b are disposed in planes that are substantially parallel to a tangent to the track at the point of impingement of the light beam L thereon. By reason of the foregoing arrangement of the H-shaped elastic body 15, the parallel legs 15a and 15b relatively strongly resist swinging movements of the mounting member 11 and corresponding displacements of the objective lens 12 in the direction along the track being scanned, while only relatively light yieldable resistance is offered to swinging movements of the mounting member 11 and the corresponding displacements of the objective lens 12 in the transverse direction relative to the track being scanned.

Referring again to Figure 2, it will be seen that a first electromagnetic device 16 is provided adjacent to the lower end of the mounting

member 11 and is operative to effect the desired swinging movements of the mounting member 11. More particularly, the first electromagnetic device 16 includes a pair of coils 17a and 17b mounted on the mounting member 11 at diametrically opposed locations adjacent to the lower end thereof, and magnets 18a and 18b mounted at the lower end of the support member 14 in confronting relation to diametrically opposed coils 17a and 17b, respectively. Thus, swinging movements of the mounting member 11 for correcting any tracking errors are effected in response to the supply of suitable driving currents or tracking errors signals to the diametrically opposed coils 17a and 17b.

The objective lens assembly 3 further comprises a second electromagnetic device 19 disposed adjacent to the upper or suspended end of the mounting member 11 and operative to effect the longitudinal movements of the mounting member 11 relative to the support member 14. The second electromagnetic device 19 is shown to include a coil 20 wound on a cylindrical bobbin 21 which is coaxial with the mounting member 11 and depends from a radially outward directed flange 42 at the upper end portion of the mounting member 11. The second electromagnetic device 19 also includes an annular magnet 22 for generating a magnetic field intersected by the coil 20 so that the supply of a driving current or focusing error signal to the coil 20 is effective to cause longitudinal movements of the mounting member 11 relative to the support member 14. Preferably, as shown, the support member 14 includes a lower or first portion 14a extending axially from adjacent to the lower end of the mounting member 11 to a radially inwardly directed flange 14b above the elastic body 15 and terminating in a reduced diameter section 14c which extends axially between the mounting member 11 and the bobbin 21 to adjacent to the upper end portion of the mounting member 11. The support member 14 further includes a relatively short cylindrical second or upper portion 14d having an in-turned lower edge portion 14e, and the annular magnet 22 of the second electromagnetic device 19 is suitably secured axially between the portions 14a and 14d of the support member 14.

The support member 14 is formed of magnetic material and its portions 14a and 14d are relatively dimensioned so that an annular gap 23 is defined between the reduced diameter section 14c of the lower portion 14a and the in-turned edge 14e of the upper portion 14d for receiving the bobbin 21 with the coil 20 thereon. With the annular magnet 22 polarized to provide opposite poles at its top and bottom surfaces, it will be apparent that the flange 14b and the reduced diameter section 14c of the lower portion 14a and the upper portion 14d act as a yoke to provide a concentrated magnetic field across the annular gap 23 for cooperation with the coil 20. Thus, the mounting member 11 and the objective lens 12 thereon, are sensitively longitudinally displaced in response to the application of a focusing error signal to the coil 20.

Since the mounting member 11 is suspended from the support member 14 only by a single leaf spring member 13 and by the elastic body 15 of substantially bulky elastic material, there is no danger that a secondary resonance will be generated. If the leaf spring member 13 is formed of phosphor bronze, beryllium bronze, stainless steel or the like, its mechanical strength can be made sufficient for the normal operation of the objective lens assembly 3, in which case there is no danger that, with time, variations will appear in the verticality of the mounting member 11 or in its centre or neutral position considered in the vertical direction. Moreover, by using a foamed synthetic resin, such as polyurethane foam, for the elastic body 15, the value of Q can be lowered while the generation of noise and any plastic deformation of the leaf spring member 13 are avoided under conditions of normal operation.

However, if an abnormal phenomenon occurs in the operation of the optical disc player and, as a result thereof, the objective lens mounting member 11 is made to swing or move longitudinally beyond its normal ranges for such movements, the resulting forces applied to the leaf spring member 13 may exceed the yielding stresses thereof with the result that the leaf spring member 13 is subjected to plastic deformation. Similarly, plastic deformation of the leaf spring member 13 may occur when the objective lens assembly 3 is being handled either during the assembly thereof or during maintenance. If the leaf spring member 13 is subjected to plastic deformation, the optical axis of the objective lens 12 may be inclined with the result that the focusing effect of the objective lens 12 is deteriorated, or the servo action for correcting focusing and/or tracking errors may become unstable.

If such extreme caution is exercised during the manufacturing of the objective lens assembly 3 so as to avoid any excessive stressing of the leaf spring member 13 that might result in its plastic deformation, then the manufacturing or assembling operations become disadvantageously slow and inefficient. Moreover, if the thickness of the leaf spring member 13 is reduced so as to increase the sensitivity of the mounting member 11, in its longitudinal and swinging movements, to the focusing and tracking error signals applied to the coil 20 and to the coils 17a and 17b, respectively, then the susceptibility of the leaf spring member 13 to being plastically deformed in response to excessive stressing is increased, and the warping or deflection of the leaf spring member 13 in the absence of any signals applied to the coils 17a, 17b and 20 may become undesirably large.

In order to avoid the foregoing problems, in the objective lens assembly 3 the leaf spring member 13 is preferably formed of amorphous metal, such as,

$Fe_8Co_{72}Si_{10}B_{10}$

or

$Fe_{60}Cr_{20}P_{13}C_7$,

and has a thickness of about 40 microns. Such amorphous metal has a high strength or toughness, and provides a yielding strength of 200 to 300 kg/mm$^2$ with a Young's modulus of $10^4$ kg/mm$^2$, so that, even if an abnormal phenomenon occurs during the operation of the optical disc player which causes excessive swinging or longitudinal movements of the mounting member 11, the leaf spring member 13 is not subject to plastic deformation. Therefore, the neutral position of the objective lens 12 is maintained constant, both in terms of the perpendicularity of its optical axis with respect to the surface of the disc 4 and with respect to the focal position of the objective lens 12.

Moreover, when the leaf spring member 13 is formed of $Fe_8Co_{72}Si_{10}B_{10}$, which is magnetic, the leaf spring member 13 can function as a shield for magnetic flux, thereby avoiding any magnetic influence of the objective lens assembly 3 on any adjacent magnetic circuit.

Of course, in the objective lens assembly 3, when the mounting member 11 is tilted or subjected to swinging movements for correcting tracking errors, the objective lens 12 is correspondingly tilted. However, such tilting of the objective lens 12 is small enough to pose no significant problem. For example, if it is assumed that the mounting member 11 has a length of 30 mm, and that the tracking servo operation requires a maximum lateral displacement of the objective lens 12 of as much as ±100 microns, then the corresponding tilting ange α of the mounting member 11 is as follows

$$\alpha=\tan^{-1}\frac{0.1}{30}=0.19°$$

Abberations resulting from the passage of the light beam through the objective lens 12 at such a small angle to the optical axis can be substantially removed by conventional means, and therefore, pose no problem.

Moreover, in the case of the H-shaped elastic body 15 shown in Figure 4A, the sensitivity of the tracking servo is sufficiently high, particularly if the elastic body 15 is formed of polyurethane foam. For example, in such case, if each of the coils 17a and 17b, has 100 turns, and if each of the legs 15a and 15b of the elastic body 15 has a length of 4 mm, measured from the central portion 15c to the inner surface of the support member 14, and a thickness of 3 mm and a width of 3 mm, the ratio of the lateral displacement of the objective lens 12 to the driving current supplied to the coils 17a and 17b will be several 10 microns/mA.

The above described objective lens assembly 3 is particularly suited for correcting focusing and tracking errors in an optical disc player. However, embodiments of objective lens assembly according to the invention may also be provided for correcting time base errors in the reproduced information signal. For example, as shown in Figure 4B, in a modified embodiment of optical lens assembly 3' according to the invention, and which is otherwise similar to the previously described objective lens assembly 3, an elastic body 15' is generally X-shaped in cross-section to present legs 15'a and 15'b which are angularly spaced from each other approximately at right angles. The legs 15'a and 15'b extend radially outward from a central portion 15'c which embraces a tubular mounting member 11, and the outer ends of the legs 15'a and 15'b are adhered or otherwise bonded to the inner surface of an outer housing or support member 14. Moreover, the legs 15'a and 15'b are angularly disposed so that the right angles therebetween will be substantially bisected by the diametrical disposition of the coils 17a and 17b shown in Figure 2 on the lower end of the mounting member 11 for effecting the tracking servo action.

In the objective lens assembly 3', additional coils (not shown) similar to the coils 17a and 17b are provided on the lower end portion of the mounting member 11 but at locations that are right angularly related to the coils 17a and 17b, and additional magnets (not shown) similar to the magnets 18a and 18b in Figure 2 are mounted at the lower end of the support member 14 so as to confront the previously mentioned additional coils on the mounting member 11. With the foregoing arrangement, supply of a driving current or time base error signal to the additional coils on the mounting member 11 is effective to cause swinging movements of the mounting member 11 in the direction along a track being scanned on the disc 4, thereby to correct a detected time base error in the reproduced information signal. Of course, in the case of the objective lens assembly 3', servo signals may be applied to the coils 17a and 17b and to the coil 20 for correcting tracking errors and focusing errors, respectively, in the same way as in the first described embodiment.

## Claims

1. An apparatus for directing a light beam (L) onto a record medium surface for optically reading information recorded in a track on said surface and including an objective lens assembly (3) comprising:

a lens (12) interposed in the path of said light beam (L) for focusing said light beam (L) substantially at said record medium surface;

a tubular lens mounting member (11) through which said path extends longitudinally and having said lens (12) mounted at one end of said mounting member (11) with an optical axis of said lens (12) coinciding substantially with said path of said light beam (L) therethrough;

a support member (14) extending about said mounting member (11);

metallic leaf spring means (13) extending between the other end of said mounting member (11) and said support member (14) for longitudinal movements of said mounting member (11) in the direction of said optical axis and for swinging movements of said mounting member (11) about a centre in said other end; and

an elastic body (15) interposed between said support member (14) and said mounting member (11) at a location along said mounting member (11) spaced from said other end;

characterised in that:

said elastic body (15) is made of foamed synthetic resin and has a plurality of legs (15a, 15b) extending between said mounting member (11) and said support member (14), said legs (15a, 15b) extending in predetermined directions so that there is relatively large resistance to said swinging movements of said mounting member (11) in said predetermined directions and a relatively small resistance to said swinging movements of said mounting member (11) in directions angled to said predetermined directions.

2. Apparatus according to claim 1 wherein said elastic body (15) is generally of H-shaped cross-section having parallel legs (15a, 15b) extending in said predetermined directions which are parallel to said track on said surface.

3. Apparatus according to claim 1 wherein said elastic body (15') is generally of X-shaped cross-section having legs (15'a, 15'b) disposed at right angles extending in said predetermined directions which are angularly spaced from directions along said track on said surface and transverse thereto, respectively, so that said mounting member (11) is relatively free to swing in said directions along said track and transverse thereto for correcting time base errors and tracking errors, respectively.

4. Apparatus according to claim 1, claim 2 or claim 3 wherein said foamed synthetic resin is polyurethane foam.

5. Apparatus according to any one of the preceding claims wherein said leaf spring means (13) is of amorphous metal.

6. Apparatus according to any one of the preceding claims wherein said leaf spring means (13) includes inner and outer circular portions (13a, 13b) secured to said mounting member (11) and said support member (14), respectively, and a plurality of equally spaced, substantially spiral connecting portions (13c) extending integrally between said inner and outer circular portions (13a, 13b).

7. Apparatus according to any one of the preceding claims further comprising first electromagnetic means (16) cooperatively provided on said mounting and support members (11, 14) adjacent to said one end of the mounting member (11) and operative to effect said swinging movements of said mounting member (11), and second electromagnetic means (19) cooperatively provided on said mounting and support members (11, 14) adjacent to said other end of said mounting member (11) and operative to effect said longitudinal movements of said mounting member (11) relative to said support member (14).

8. Apparatus accordiang to claim 7 wherein said support member (14) is cylindrical and has a first portion (14a) extending axially from adjacent to said one end of said mounting member (14) and terminating in a reduced diameter section (14c) extending adjacent to said other end of said mounting member (14), and a second portion (14d) adjacent to said other end of said mounting member (14) and spaced radially outward from said reduced diameter section (14c) to define a gap (23) therebetween, and said second electromagnetic means (19) includes an annular magnet (22) interposed between said first and second portions (14a, 14d) of said support member (14) for generating a magnetic field across said gap (23), a cylindrical bobbin (21) mounted on said other end of said mounting member (14) and extending axially into said gap (23), and a coil (23) wound on said bobbin (21) to intersect said magnetic field so that said longitudinal movements of said mounting member (11) are effected in response to supply of a driving current to said coil (23).

9. Apparatus according to claim 8 wherein said first electromagnetic means (16) includes at least one pair of diametrically opposed coils (17a, 17b) on said mounting member (11) adjacent to said one end of said mounting member (11) and magnets (18a, 18b) on said first portion (14a) of said support member (14) in confronting relation to said diametrically opposed coils (17a, 17b) so that said swinging movements of said mounting member (11) are effected in response to supply of a driving current to said diametrically opposed coils (17a, 17b).

10. Apparatus according to claim 9 wherein said body (15) is located approximately midway along said mounting member (11) between said one and said other ends thereof.

11. Apparatus according to any one of the preceding claims wherein the record medium is in the form of a disc (4) which is rotated about the centre thereof, said track is substantially circular and concentric with said disc (4), said optical axis of said lens (12) is substantially normal to said record medium surface so that said longitudinal movements of said mounting member (11) vary the focus of said lens (12) at said surface, and said swinging movements of said mounting member (11) have components substantially in a plane radiating from said centre of said disc (4) so as to be effective to vary the point of impingement of said light beam (L) on said surface in the direction transverse to said track.

**Patentansprüche**

1. Einrichtung zum Ausrichten eines Lichtstrahls (L) auf eine Oberfläche eines Aufzeichnungsmediums zum optischen Auslesen von Information, die in einer Spur auf der Oberfläche aufgezeichnet ist, welche Einrichtung eine Objektivlinsenanordnung (3) enthält, mit

einer Linse (12), die in dem Weg des Lichtstrahls (L) zum Fokussieren des Lichtstrahls (L) im wesentlichen auf die Oberfläche des Aufzeichnungsmediums angeordnet ist,

einem rohrförmigen Linsenmontageteil (11), durch welches sich der Weg in Längsrichtung erstreckt und das die Linse (12) enthält, die an einem Ende des Linsenmontageteils (11) montiert ist, wobei eine optische Achse der Linse (12) im wesentlichen mit dem dadurch verlaufenden Weg des Lichtstrahls (L) zusammenfällt,

einem Tragteil (14), das sich um das Linsenmontageteil (11) herum erstreckt,

einem metallischen Blattfederteil (13), das sich zwischen dem anderen Ende des Linsenmontageteils (11) und dem Tragteil (14) zum Ermöglichen von Längsbewegungen des Linsenmontageteils (11) in Richtung der optischen Achse und zum Ermöglichen von Schwingungsbewegungen des Linsenmontageteils (11) um ein Zentrum an dem anderen Ende erstreckt, und

einem elastischen Körper (15), der zwischen dem Tragteil (14) und dem Linsenmontageteil (11) an einer Stelle längs des Lindenmontageteils (11), die einen Abstand von dem anderen Ende aufweist, angeordnet ist, dadurch gekennzeichnet,

daß der elastische Körper (15) aus einem geschäumten synthetischen Harz besteht und ein Vielzahl von Beinen (15a, 15b), hat, die sich zwischen dem Linsenmontageteil (11) und dem Tragteil (14) erstrecken, wobei sich die Beine (15a, 15b) in vorbestimmten Richtungen derart erstrecken, daß ein verhältnismäßig großer Widerstand gegen die Schwingungsbewegungen des Linsenmontageteils (11) in den vorbestimmten Richtungen und ein verhältnismäßig kleiner Widerstand gegen die Schwingungsbewegungen des Linsenmontageteils (11) in Richtungen, die unter einem Winkel zu den vorbestimmten Richtungen verlaufen, besteht.

2. Einrichtung nach Anspruch 1, dadurch gekennzeichnet, daß der elastische Körper (15) im allgemeinen einen H-förmigen Querschnitt hat, der parallelverlaufende Beine (15a, 15b) aufweist, die sich in den vorbestimmten Richtungen erstrecken, die parallel zu der Spur auf der Oberfläche verlaufen.

3. Einrichtung nach Anspruch 1, dadurch gekennzeichnet, daß der elastische Körper (15') im allgemeinen einen X-förmigen Querschnitt hat, der Beine (15'a, 15'b) aufweist, die sich unter rechten Winkeln in den vorbestimmten Richtungen, welche einen winkelmäßigen Abstand von den Richtungen längs der Spur auf der Oberfläche aufweisen, beziehungsweise quer dazu erstrecken, so daß das Linsenmontageteil (11) verhältnismäßig frei zum Schwingen in den Richtungen längs der Spur und quer dazu zum Korrigieren von Zeitbasisfehlern beziehungsweise Spurverfolgungsfehlern ist.

4. Einrichtung nach Anspruch 1, 2 oder 3, dadurch gekennzeichnet, daß das geschäumte synthetische Harz ein Polyurethan-Schaum ist.

5. Einrichtung nach einem der vorhergehenden Ansprüche, dadurch gekennzeichnet, daß das Blattfederteil (13) aus einem amorphen Metall besteht.

6. Einrichtung nach einem der vorhergehenden Ansprüche, dadurch gekennzeichnet, daß das Blattferedteil (13) innere und äußere kreisförmige Abschnitte (13a, 13b), die an dem Linsenmontageteil (11) bzw. dem Tragteil (14) befestigt sind, und eine Vielzahl von gleichförmige Abstände voneinander aufweisenden, im wesentlichen spiralförmigen Verbindungsabschnitten (13c) enthält, die sich zwischen dem inneren und dem äußeren kreisförmigen Abschnitt (13a, 13b) in einem Stück mit diesen erstrecken.

7. Einrichtung nach einem der vorhergehenden Ansprüche, gekennzeichnet durch eine erste elektromagnetisches Anordnung (16), die zum Zusammenwirken mit dem Linsenmontageteil (11) und dem Tragteil (14) auf diesen und neben dem einen Ende des Linsenmontageteils (11) vorgesehen ist und wirksam ist, um die Schwingungsbewegungen des Linsenmontageteils (11) zu erzeugen, sowie eine zweite elektromagnetische Anordnung (19), die zum Zusammenwirken mit dem Linsenmontageteil (11) und dem Tragteil (14) auf diesen und neben dem anderen Ende des Linsenmontageteils (11) vorgesehen ist und wirksam zum Erzeugen der Längsbewegungen den Linsenmontageteils (11) relativ zu dem Tragteil (14) ist.

8. Einrichtung nach Anspruch 7, dadurch gekennzeichnet, daß das Tragteil (14) zylindrisch ist und einen ersten Abschnitt (14a), der sich in axialer Richtung von der Nähe des einen Endes des Linsenmontageteils (11) aus erstreckt und in einem Abschnitt verringerten Durchmessers (14c) endet, der sich bis in die Nähe des anderen Endes des Linsenmontageteils (11) erstreckt, sowie einen zweiten Abschnitt (14d) neben dem anderen Ende des Linsenmontageteils (11) und unter einem Abstand radial nach außen von dem Abschnitt verringerten Durchmessers (14c) angeordnet enthält, um einen Spalt (23) dazwischen zu definieren, und daß die zweite elektromagnetische Anordnung (19) einen ringförmigen Magneten (22), der zwischen dem ersten und dem zweiten Abschnitt (14a, 14d) des Tragteils (14) zum Erzeugen eines magnetischen Feldes quer zu dem Spalt (23) angeordnet ist, einen zylindrischen Spulenkörper (21), der an dem anderen Ende des Linsenmontageteils (11) angebracht ist und sich axial in den Spalt (23) hinein erstreckt, sowie eine Spule (23) enthält, die um den Spulenkörper (21) herum gewickelt ist und das magnetische Feld durchschneidet, so daß die Längsbewegungen des Linsenmontageteils (11) aufgrund eines Zuführens eines Treiberstroms zu der Spule (23) bewirkt werden.

9. Einrichtung nach Anspruch 8, dadurch gekennzeichnet, daß die erste elektromagnetische Anordnung (16) zumindest ein Paar von sich diametral gegenüberstehenden Spulen (17a, 17b) auf dem Linsenmontageteil (11) neben dem einen Ende des Linsenmontageteils (11) und

Magnete (18a, 18b) auf dem ersten Abschnitt (14a) des Tragteils (14) den sich diametral gegenüberstehenden Spulen (17a, 17b) derart gegenüberliegend angeordnet enthält, daß die Schwingungsbewegungen des Linsenmontageteils (11) aufgrund der Zuführens eines Treiberstroms zu den sich diametral gegenüberstehenden Spulen (17a, 17b) bewirkt werden.

10. Einrichtung nach Anspruch 9, dadurch gekennzeichnet, daß der Körper (15) angenähert in der Mitte in Längsrichtung des Linsenmontageteils (11) zwischen dessen einem und dessen anderem Ende angeordnet ist.

11. Einrichtung nach einem der vorhergehenden Ansprüche, dadurch gekennzeichnet, daß das Aufzeichnungsmedium die Form einer Scheibe (4) hat, die um ihren Mittelpunkt gedreht wird, wobei die Spur im wesentlichen kreisförmig ist und konzentrisch mit der Scheibe (4) verläuft und wobei die optische Achse der Linse (12) im wesentlichen senkrecht zu der Oberfläche des Aufzeichnungsmediums liegt, so daß die Längsbewegungen des Linsenmontageteils (11) den Fokus der Linse (12) auf der Oberfläche ändern und die Schwingungsbewegungen des Linsenmontageteils (11) Komponenten aufweisen, die im wesentlichen in einer Ebene liegen, die sich von dem Mittelpunkt der Scheibe (4) aus erstreckt, um so zu bewirken, daß der Punkt des Auftreffens des Lichtstrahls (L) auf der Oberfläche in Richtung quer zu der Spur verändert werden kann.

**Revendications**

1. Appareil permettant de diriger un faisceau lumineux (L) sur la surface d'un support d'enregistrement pour lire optiquement l'information enregistrée sur une piste de ladite surface et comportant un ensemble d'objectif optique (3) comprenant:

un objectif (12) placé dans le trajet dudit faisceau lumineux (L) afin de mettre au point ledit faisceau lumineux (L) sensiblement au niveau de ladite surface du support d'enregistrement;

un élément tubulaire (11) de montage d'objectif dans lequel ledit trajet est orienté longitudinalement et par une première extrémité duquel ledit objectif (12) est monté de façon que son axe optique coïncide sensiblement avec ledit trajet dudit faisceau lumineux (L) le traversant;

un élément de support (14) entourant ledit élément de montage (11);

un moyen (13) formant une lame de ressort métallique qui s'étend entre l'autre extrémité dudit élément de montage (11) et ledit élément de support (14) de manière à permettre des déplacement longitudinaux dudit élément de montage (11) suivant la direction dudit axe optique et des déplacements oscillants dudit élément de montage (11) autour d'un centre situé dans ladite autre extrémité; et

un corps élastique (15) placé entre ledit élément de support (14) et ledit élément de montage (11) en un emplacement situé le long dudit élément de montage (11) à une certaine distance de ladite autre extrémité;

caractérisé en ce que:

ledit corps élastique (15) est fait en mousse de résine synthétique et possède plusieurs pattes (15a, 15b) s'étendant entre ledit élément de montage (11) et ledit élément de support (14), lesdites pattes (15a, 15b) étant orientées dans des directions prédéterminées de manière qu'il existe une résistance relativement importante auxdits déplacement oscillants dudit élément de montage (11) dans lesdites directions prédéterminées et une résistance relativement petite auxdits déplacements oscillants dudit élément de montage (11) dans des directions faisant un angle avec lesdites directions prédéterminées.

2. Appareil selon la revendication 1, où ledit corps élastique (15) présente en section droite la forme générale d'un H dont les branches parallèles (15a, 15b) sont orientées dans lesdites directions prédéterminées, lesquelles sont parallèles à ladite piste se trouvant sur ladite surface.

3. Appareil selon la revendication 1, où ledit corps élastique (15') présente, en section droite, sensiblement la forme d'un X dont les branches (15'a, 15'b) sont disposées à angle droit et sont orientées dans lesdites directions prédéterminées, lesquelles sont angulairement séparées des directions suivies par la piste sur ladite surface et respectivement transversales par rapport à celles-ci, si bien que ledit élément de montage (11) est relativement libre d'osciller dans lesdites directions suivant ladite piste et transversalement à celles-ci, respectivement pour corriger les erreurs de base de temps et les erreurs de poursuite de piste.

4. Appareil selon la revendication 1, 2 ou 3, où ladite mousse de résine synthétique est une mousse de polyuréthanne.

5. Appareil selon l'une quelconque des revendications précédentes, où ledit moyen (13) formant une lame de ressort est en métal amorphe.

6. Appareil selon l'une quelconque des revendications précédentes, où ledit moyen (13) formant une lame de ressort comporte des parties circulaires interne et externe (13a, 13b) respectivement fixées audit élément de montage (11) et audit élément de support (14), et plusieurs parties de liaison sensiblement en spirale également séparées (13c) qui s'étendent solidairement entre lesdites parties circulaires intérieure et extérieure (13a, 13b).

7. Appareil selon l'une quelconque des revendications précédentes, comprenant en outre un premier moyen électromagnétique (16) monté en coopération sur lesdits éléments de montage et de support (11, 14) au voisinage de ladite première extrémité de l'élément de montage (11) et ayant pour fonction de produire lesdits déplacements oscillants dudit élément de montage (11), et un deuxième moyen électromagnétique (19) monté en coopération sur lesdits éléments de montage et de support (14, 11) au voisinage de ladite autre extrémité dudit élément

de montage (11) et ayant pour fonction de produire lesdits déplacements longitudinaux dudit élément de montage (11) par rapport audit élément de support (14).

8. Appareil selon la revendication 7, caractérisé en ce que ledit élément de support (14) est cylindrique et possède une première partie (14a) qui se prolonge axialement depuis le voisinage de ladite première extrémité dudit élément de montage (14) et se termine par une section de diamètre réduit (14c) s'étendant au voisinage de ladite autre extrémité dudit élément de montage (14), et une deuxième partie (14d) voisine de ladite autre extrémité dudit élément de montage (14) et radialement écartée vers l'extérieur par rapport à ladite section de diamètre réduit (14c) de façon à définir un entrefer (23) avec elle, et ledit deuxième moyen électromagnétique (19) comporte un aimant annulaire (22) placé entre lesdites première et deuxième parties (14a, 14d) dudit élément de support (14) afin de produire un champ magnétique coupant ledit entrefer (23), un corps de bobine cylindrique (21) monté sur ladite autre extrémité dudit élément de montage (14) et s'étendant axialement dans ledit entrefer (23), et une bobine (23) bobinée sur ledit corps de bobine (21) de façon à couper ledit champ magnétique de sorte que lesdits déplacements longitudinaux dudit élément de montage (11) s'effectuent en réponse à la délivrance d'un courant de commande à ladite bobine (23).

9. Appareil selon la revendication 8, où ledit premier moyen électromagnétique (16) comporte au moins une paire de bobines diamétralement opposées (17a, 17b) disposées sur ledit élément de montage (11) au voisinage de ladite première extrémité dudit élément de montage (11), et des aimants (18a, 18b) disposés sur ladite première partie (14a) dudit élément de support (14) en regard desdites bobines diamétralement opposées (17a, 17b), si bien que lesdits déplacements oscillants dudit élément de montage (11) s'effectuent en réponse à la délivrance d'un courant de commande auxdites bobines diamétralement opposées (17a, 17b).

10. Appareil selon la revendication 9, où ledit corps (15) est placé approximativement à mi-chemin dudit élément de montage (11) entre ladite première et ladite autre extrémité de celui-ci.

11. Appareil selon l'une quelconque des revendications précédentes, où le support d'enregistrement se présente sous la forme d'un disque (4) qui est entraîné en rotation autour de son centre, ladite piste étant sensiblement circulaire et concentrique audit disque (4), ledit axe optique dudit objectif (12) est sensiblement perpendiculaire à la surface du support d'enregistrement si bien que lesdits déplacements longitudinaux dudit élément de montage (11) font varier la position du foyer dudit objectif optique (12) au niveau de ladite surface, et lesdits déplacements oscillants dudit élément de montage (11) possèdent des composantes situées sensiblement dans un plan rayonnant depuis ledit centre dudit disque (4) de façon à pouvoir faire varier le point d'impact dudit faisceau lumineux (L) sur ladite surface dans une direction transversale à ladite piste.

FIG. 1

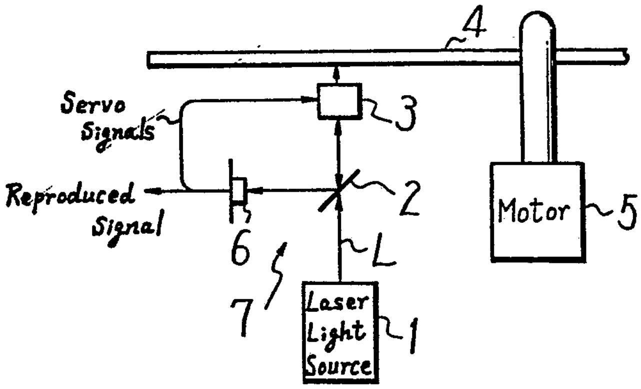
4
Servo
Signals
3
Reproduced
Signal
2
Motor
5
6
L
7
Laser
Light
Source
1

FIG. 2

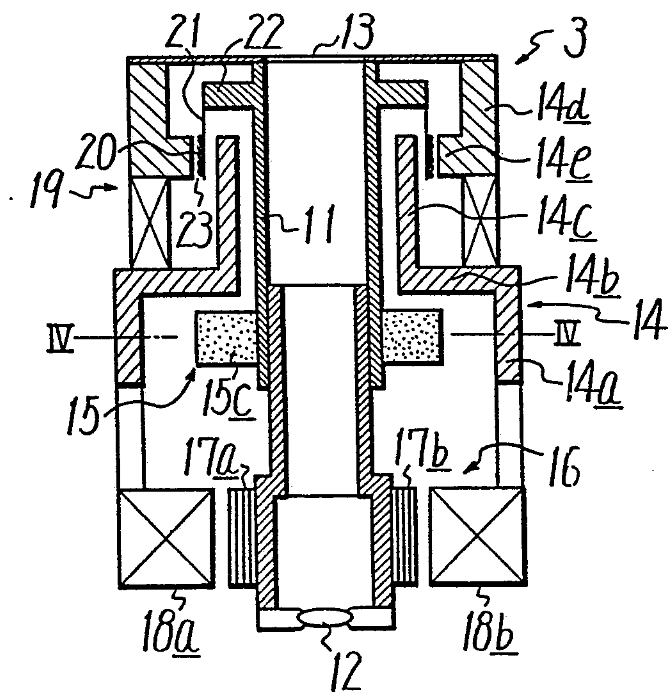
21
22
13
3
14d
20
14e
19
23
11
14c
14b
14
IV
IV
15c
14a
15
17a
17b
16
18a
18b
12

FIG. 3

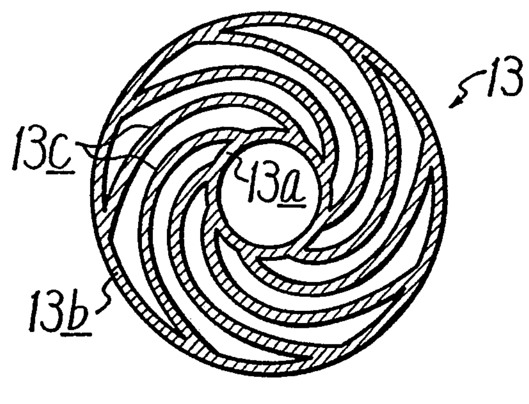


FIG. 4A

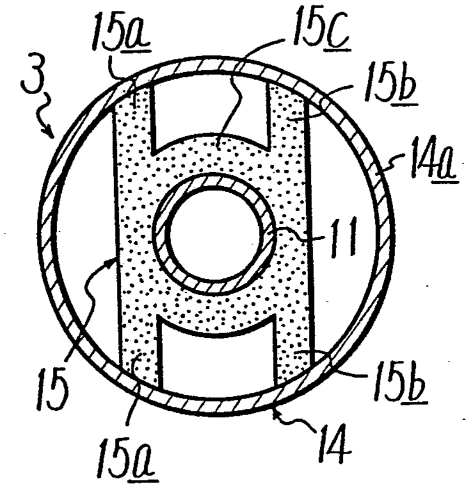


FIG. 4B